# EUROPEAN PATENT SPECIFICATION

(11) **EP 3 225 379 B1**
(45) Date of publication and mention of the grant of the patent: **27.01.2021**
(21) Application number: 15864250.4
(22) Date of filing: 09.10.2015
(51) Int. Cl.: B29C 49/08, B29C 49/48, B29B 11/10, B29C 49/04, B65D 1/00, B29C 49/46

(54) **PREFORM FOR BIAXIAL STRETCHING BLOW MOLDING, CONTAINER, PROCESS FOR PRODUCING PREFORM FOR BIAXIAL STRETCHING BLOW MOLDING, AND PROCESS FOR PRODUCING CONTAINER**
VORFORM FÜR BIAXIALES STRECKBLASFORMEN, BEHÄLTER, VERFAHREN ZUM HERSTELLEN EINER VORFORM FÜR BIAXIALES STRECKBLASFORMEN UND VERFAHREN ZUR HERSTELLUNG EINES BEHÄLTERS
PARAISON POUR MOULAGE PAR SOUFFLAGE ÉTIRAGE BIAXIAL, RÉCIPIENT, PROCÉDÉ DE PRODUCTION D'UNE PARAISON POUR MOULAGE PAR SOUFFLAGE ÉTIRAGE BIAXIAL, ET PROCÉDÉ DE PRODUCTION DE RÉCIPIENT

(30) Priority: 28.11.2014 JP 2014242120; 31.07.2015 JP 2015151685
(43) Date of publication of application: 04.10.2017
(73) Proprietor: Yoshino Kogyosho Co., Ltd., Tokyo 136-8531 (JP)
(72) Inventor: SASAKI, Masaaki, Tokyo 136-8531 (JP)
(74) Representative: Cohausz & Florack
(86) International application number: PCT/JP2015/005146
(87) International publication number: WO 2016/084301

(56) References cited:
- EP-A1- 0 355 437
- EP-A1- 1 541 475
- EP-A1- 2 261 125
- WO-A1-92/05027
- WO-A1-2009/107815
- JP-A- H0 839 656
- JP-A- 2004 067 171
- JP-A- 2007 296 720
- JP-A- 2013 249 112
- JP-A- 2013 541 448
- JP-A- 2014 069 441
- US-A- 3 390 426
- US-A- 3 524 218
- US-A- 3 663 522
- US-A- 3 699 201
- DATABASE WPI Week 201231 Thomson Scientific, London, GB; AN 2012-E84471 XP002780249, -& WO 2012/054221 A2 (AMCOR LTD) 26 April 2012 (2012-04-26)

## Description

### TECHNICAL FIELD

The present disclosure relates to a preform to be biaxially stretch blow molded that is formed by extrusion blow molding and to a container that is formed by biaxially stretch blow molding the preform. The present disclosure also relates to a process for producing a preform to be biaxial stretch blow molded and to a process for producing a container with use of the preform.

### BACKGROUND

In recent years, due to their numerous advantageous properties including lightweight and excellent appearance designs, many synthetic resin containers formed by blow molding are used in a variety of fields. A container of this kind is generally produced by biaxially stretch blow molding a synthetic resin preform, which has a bottomed tubular shape including a mouth, a trunk, and a bottom, into a predetermined shape in the state where the preform is heated to a temperature at which a stretching effect may be achieved. The biaxial stretch blow molding involves stretching the preform in the longitudinal direction by using a stretching rod and stretching the preform in the lateral direction by using a pressurizing medium supplied into the preform.

Meanwhile, as an example of biaxial stretch blow molding used to mold a preform into a container, liquid blow molding is known. In liquid blow molding, instead of pressurized air, a pressurized liquid is used as the pressurizing medium supplied into the preform. According to liquid blow molding, since a content liquid to be contained in the container as a final product may be used as the fluid supplied into the preform, the process of filling the content liquid to the container after molding may be omitted. Accordingly, the production process and the configuration of a blow molding device may be simplified.

As an example of the preform used to produce such a synthetic resin container, as described, for example, in Patent Literature 1, an existing preform may be formed by extrusion blow molding (direct blow molding). In extrusion blow molding (direct blow molding), a tube-shaped molten parison is extruded from an extruder, and the molten parison is sandwiched in a two-part mold, which is splittable into left and right halves along the axis line. Then, pressurized gas is blown into the parison to mold the parison into a shape conforming to an inner surface of the mold.

### CITATION LIST

### Patent Literature

PTL 1: JP2003071910A Further similar blow moulding processes are disclosed in EP1541475A1, US3663522A, US3390426A, US3524218A, WO92/05027A1, EP0355437A1, US3699201A, JP2013249112A, EP2261125A1 and WO2012/054221A2.

In particular EP1541475A1 (paragraphs 17, 43-46) discloses a relevant process for producing a container, the process comprising: biaxially stretch blow molding a preform formed in a bottomed tubular shape including a mouth, a trunk, and a bottom into a container by using air as a pressurizing medium, wherein a portion of a mold used to form the preform by extrusion blow molding that corresponds to the bottom has a structure that is splittable into at least three parts in a circumferential direction of the bottom, and joints of the portion of the mold extend to an outer side from an axis of the bottom, and wherein, during the biaxial stretch blow molding, an annular-shaped ground-contacting portion is formed in a bottom of the container, and one or more bottom parting line marks, which correspond to one or more bottom parting lines, are positioned inside the ground-contacting portion by adjusting the lengths of the bottom parting lines, which are formed in the preform along the joints of the portion of the mold.

### SUMMARY

### (Technical Problem)

However, since the molten parison is sandwiched in the two-part mold in extrusion blow molding, a single straight parting line is formed in the bottom of the aforementioned existing preform. This results in a large difference in thickness between a portion of the bottom that is located in the vicinity of the parting line and a portion of the bottom that is located 90 degrees offset from the parting line. The difference in thickness poses the problem that the preform may rupture while being stretched due to biaxial stretch blow molding.

The present disclosure has been conceived in view of the above problem, and the present disclosure is to provide a technology that allows the preform, which is formed by extrusion blow molding, to be molded into the container stably by biaxial stretch blow molding In particular the present disclosure is conceived in view of providing processes for adjusting the lengths of the parting lines.

### (Solution to Problem)

The present invention is defined by the process features of independent claim 1.

In a preferred embodiment of the preform to be biaxially stretch blow molded according to the present disclosure, the one or more bottom parting lines include four bottom parting lines arranged in a cross shape.

In another preferred embodiment of the preform to be biaxially stretch blow molded according to the present disclosure, all lengths of the one or more bottom parting lines from the axis of the bottom to outer ends thereof are equal.

Another aspect of the present disclosure resides in a container that is formed by biaxially stretch blow molding the above preform to be biaxially stretch blow molded by using the liquid as the pressurizing medium.

In a preferred embodiment of the container according to the present disclosure, the container includes an annular-shaped ground-contacting portion in a bottom thereof, wherein one or more bottom parting line marks corresponding to the one or more bottom parting lines are positioned inside the ground-contacting portion.

Yet another aspect of the present disclosure resides in a process for producing a preform to be biaxially stretch blow molded into a container by using a liquid as a pressurizing medium. The process includes: forming the preform in a bottomed tubular shape including a mouth, a trunk, and a bottom by extrusion blow molding, wherein a portion of a mold used to form the preform that corresponds to the bottom has a structure that is splittable into at least three parts in a circumferential direction of the bottom, and joints of the portion of the mold extend to an outer side from an axis of the bottom.

In a preferred embodiment of the process for producing a preform to be biaxially stretch blow molded according to the present disclosure, the portion of the mold that corresponds to the bottom has a structure that is splittable into four parts to divide the bottom into four equal parts in the circumferential direction.

In another preferred embodiment of the process for producing a preform to be biaxially stretch blow molded according to the present disclosure, all lengths of the joints of the portion of the mold corresponding to the bottom from the axis of the bottom to outer ends thereof are equal.

Yet another aspect of the present disclosure resides in a process for producing a container. The process includes: biaxially stretch blow molding a preform produced by the above process for producing a preform to be biaxially stretch blow molded into a container by using a liquid as a pressurizing medium.

In the the process for producing a container, during the biaxial stretch blow molding, an annular-shaped ground-contacting portion is formed in a bottom of the container, and one or more bottom parting line marks, which correspond to one or more bottom parting lines formed in the preform along the joints of the portion of the mold, are positioned inside the ground-contacting portion.

### (Advantageous Effect)

According to the present disclosure, the one or more bottom parting lines, which are formed in the bottom of the preform due to the extrusion molding, are configured to divide the bottom into at least three parts in the circumferential direction. Accordingly, the thickness of the bottom of the preform is uniform in the circumferential direction, and the preform is molded into the container stably without causing the rupture due to biaxial stretch blow molding.

### BRIEF DESCRIPTION OF THE DRAWINGS

In the accompanying drawings:
FIGs. 1A and 1B illustrate a preform according to one of embodiments of the present disclosure, and FIG. 1A is a half sectional view thereof, and FIG. 1B is a bottom view thereof;
FIGs. 2A and 2B illustrate a container according to one of embodiments of the present disclosure, and FIG. 2A is a sectional view thereof, and FIG. 2B is a bottom view thereof;
FIGs. 3A and 3B illustrate thickness distribution in a bottom of a preform illustrated in FIGs. 1A and 1B, and FIG. 3A illustrates a measurement position thereof, and FIG. 3B illustrates a thickness measurement result;
FIGs. 4A to 4C illustrate thickness distribution in a bottom of a container illustrated in FIGs. 2A and 2B, and FIG. 4A illustrates a measurement position thereof, FIG. 4B illustrates a measurement position of a reference example, and FIG. 4C illustrates a thickness measurement result; and
FIG. 5A is a bottom view illustrating a modification of a preform illustrated in FIGs. 1A and 1B, and FIG. 5B is a bottom view illustrating a modification of a container illustrated in FIGs. 2A and 2B.

### DETAILED DESCRIPTION

A preform 1 (hereinafter, called "preform 1") to be biaxial stretch blow molded, a container 11, a process for producing the preform 1, and a process for producing the container 11 according to one of embodiments of the present disclosure will be described in more detail below by illustration with reference to the drawings.

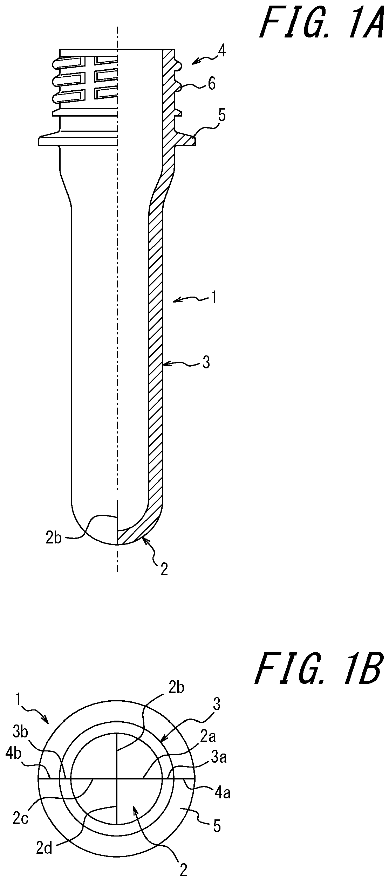

The preform 1 illustrated in FIGs. 1A and 1B is made of synthetic resin and is formed in a bottomed cylindrical shape (a substantially test-tube shape) including a hemispherical shell-shaped bottom 2, a cylindrical-shaped trunk 3, which is coupled to the bottom 2, and a mouth 4, which is open in an upper portion of the trunk 3. The mouth 4 is provided with a disc-shaped neck ring 5 and a male screw portion 6, which is disposed above the neck ring 5.

As a synthetic resin material of which the preform 1 is made, a variety of resins, such as polyethylene rein (PE), polypropylene resin (PP), and polyethylene terephthalate resin (PET), may be used.

The preform 1 is formed by extrusion blow molding (direct blow molding). That is to say, although not illustrated in detail, the preform 1 is formed as follows. That is to say, a tube-shaped molten parison is extruded from an extruder, and the molten parison is sandwiched in a mold. Then, a lower end of the prison is closed by pinching off the lower end with the mold, and pressurized gas (air) is blown into the parison from an upper end opening thereof. Thus, the parison is formed in a shape conforming to an inner surface of the mold.

In the bottom 2 of the preform 1 formed by extrusion blow molding in which a splittable mold is used, one or more bottom parting lines are formed along joints of the mold. Herein, the bottom parting lines, which are formed in the bottom 2 of the preform 1, are configured to divide the bottom 2 into at least three parts (preferably, into three equal parts) in the circumferential direction. For example, in the present embodiment, as illustrated in FIG. 1B, four bottom parting lines 2a to 2d are formed in the bottom 2 of the preform 1. The four parting lines 2a to 2d are arranged in a cross shape to divide the bottom 2 into four equal parts in the circumferential direction. The preform 1, which includes the bottom parting lines 2a to 2d in the bottom 2, may be formed by extrusion blow molding using, for example, the following mold.

That is to say, a portion of the mold, used to extrusion blow mold the preform 1, that corresponds to the trunk 3 and the mouth 4 has a two-part structure that is splittable along one plane including the axis line of the preform 1. On the other hand, a portion of the mold, used to form the preform 1, that corresponds to the bottom 2 has a four-part structure that is splittable into four parts along one plane including the axis line of the preform 1 and another plane including the axis line of the preform 1 and extending orthogonally to the one plane.

Due to extrusion blow molding using such a mold, as illustrated in FIG. 1B, the four bottom parting lines 2a to 2d, which extend along the joints of the portion of the mold, are formed in the bottom 2 of the preform 1. These bottom parting lines 2a to 2d each extend straight to the outer side in the radial direction from the axis of the bottom 2. The bottom parting lines 2a to 2d are also arranged radially side by side at an equal interval of 90 degrees from each other in the circumferential direction about the axis of the bottom 2. That is to say, the bottom parting lines 2a to 2d are arranged in the cross shape as viewed from the lower side of the bottom 2. Thus, the bottom parting lines 2a to 2d are formed in the bottom 2 of the preform 1 when the preform 1 is extrusion blow molded, and these bottom parting lines 2a to 2d are configured to divide the bottom 2 into four equal parts in the circumferential direction.

In the present embodiment, the bottom parting lines 2a to 2d each have a length extending from the axis of the bottom 2 to an outer circumferential edge of the bottom 2. That is to say, all the lengths of the four bottom parting lines 2a to 2d from the axis of the bottom 2 to outer ends thereof are equal.

The bottom parting lines 2a to 2d each extend from the axis of the bottom 2 to the outer side in the radial direction and may also have a length by which the outer ends thereof do not reach the outer circumferential edge of the bottom 2. In this case also, all the lengths of the four bottom parting lines 2a to 2d from the axis of the bottom 2 to the outer ends thereof are preferably equal.

In the present embodiment, in the trunk 3 of the preform 1, parting lines 3a and 3b are formed contiguous with the bottom parting lines 2a and 2c, and in the mouth 4 of the preform 1, mouth parting lines 4a and 4b are formed contiguous with the trunk parting lines 3a and 3b.

As described above, the trunk parting lines 3a and 3b are formed contiguous with the bottom parting lines 2a and 2c. However, the trunk parting lines 3a and 3b may also be offset with respect to the bottom parting lines 2a to 2d in the circumferential direction.

Furthermore, by adjusting the dimension of the portion of the mold with the four-part structure that corresponds to the bottom 2 of the preform 1 so that the upper end side of the portion of the mold reaches a predetermined area on the lower end side of the trunk 3 of the preform 1, a trunk parting line of a predetermined length may be formed contiguous with the outer end of each of the bottom parting lines 2a to 2d in the preform 1.

Moreover, although the trunk parting lines 3a and 3b are preferably formed contiguous with the mouth parting lines 4a and 4b as described above, these lines may also be formed to be offset with each other in the circumferential direction.

Moreover, by adopting a cylindrical-shaped unsplittable structure in the portion of the mold, used to extrusion blow mold the preform 1, that corresponds to the trunk 3 of the preform 1, the trunk parting lines 3a and 3b are not formed in the trunk 3.

Moreover, as the mold used to extrusion blow mold the preform 1, it is possible to adopt the four-part structure that allows integral molding of the bottom 2, the trunk 3, and the mouth 4, and that is splittable into four parts. In this case, four trunk parting lines in the trunk 3 may be formed contiguous with the four bottom parting lines in the bottom 2, and four mouth parting lines may be formed contiguous with the four trunk parting lines.

Additionally, when the bottom parting lines are contiguous with the trunk parting lines or when the trunk parting lines are contiguous with the mouth parting lines, it is only necessary for at least one of these lines to be contiguous with each other.

The preform 1 is subject to biaxial stretch blow molding in which a liquid is used as a pressurizing medium during liquid blow molding, and thus, the preform 1 is molded into the container 11 of a predetermined shape. In biaxial stretch blow molding, the preform 1 is heated in advance to a temperature at which the stretching effect may be achieved. Then, the preform 1 is fitted to a mold used for molding, which is not illustrated. The preform 1 is subjected to longitudinal stretching along the axis direction using a stretching rod of a blow molding device, which is also not illustrated, and to lateral stretching using the pressurized liquid injected into the preform 1 through a nozzle connected to the mouth 4. Thus, the preform 1 is shaped in accordance with a cavity of the mold used for molding and molded into the container 11 of the predetermined shape. Additionally, the stretching rod does not necessarily need to be used, and preform 1 may be biaxially stretch blow molded by using only the pressurized liquid.

In liquid blow molding, a variety of liquids may be used as the pressurizing medium. For instance, to mold a beverage container, water, tea, a soft drink, and other liquids that are to be filled into the container may be used as the pressurizing medium. For another instance, to mold a toiletry container, cosmetics, shampoo, rinse, and other liquids may be used as the pressurizing medium. By using, as the pressurizing medium, a liquid to be contained in the container as the final product, the process of filling the content liquid into the container is omitted. Accordingly, the production process and the configuration of the blow molding device are simplified.

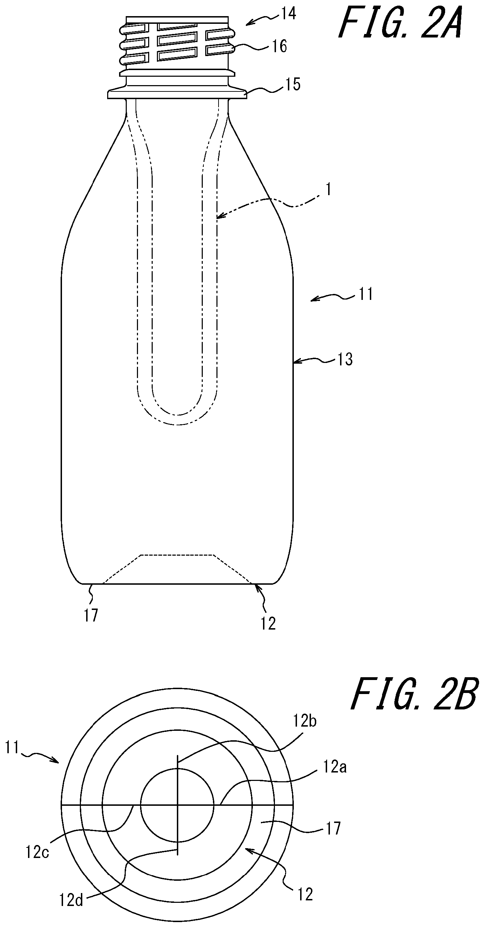

As illustrated in FIGs. 2A and 2B, the container 11 according to one of embodiments of the present disclosure is formed by stretching the bottom 2 and the trunk 3 of the preform 1, while the mouth 4 of the preform 1 remains unstretched. The container 11 includes a disc-shaped bottom 12, which has a middle portion that is concave to the inner side of the container 11, a cylindrical-shaped trunk 13, which is coupled to the bottom 12 and which has an upper portion that is reduced in diameter, and a mouth 14 (including a neck ring 15 and a male screw portion 16), which is open in the upper portion of the trunk 13.

Reference numerals 12a to 12d in FIG. 2B denote bottom parting line marks corresponding to the aforementioned four bottom parting lines 2a to 2d. That is to say, the bottom parting line marks 12a to 12d are marks of the four bottom parting lines 2a to 2d, which are left in the bottom 12 of the container 11, which is formed as a result of biaxially stretch blow molding the preform 1. Additionally, portions of the bottom parting line marks 12a and 12c that extend to the outer side of the bottom parting line marks 12b and 12d are left as marks of the trunk parting lines 3a and 3b. Similarly to the bottom parting lines 2a to 2d, the bottom parting line marks 12a to 12d are arranged radially side by side at an equal interval of 90 degrees from each other in the circumferential direction about the axis of the bottom 12. Additionally, the bottom parting line marks 12a to 12d might disappear due to biaxial stretch blow molding.

The container 11 includes an annular-shaped ground-contacting portion 17 in the bottom 12. When the container 11 is placed on a supporting surface in its upright position, with the mouth 14 of the container 11 facing upward, the ground-contacting portion 17 abuts against the supporting surface. As illustrated in FIG. 2B, the bottom parting line marks 12a to 12d are positioned inside the annular-shaped ground-contacting portion 17. On the other hand, marks of the trunk parting lines 3a and 3b that are contiguous with the bottom parting line marks 12a and 12c reach the ground-contacting portion 17.

When there is a variance in thickness of a preform, tear might occur from a thin portion of the preform in the blow molding process, and the preform might rupture. Especially in liquid blow molding, an incompressible liquid, which has a high ability to flow straight, is used as the pressurizing medium. Accordingly, unlike when a compressible liquid is used, the bottom of the preform is applied with significant load from the liquid supplied into the preform at the beginning of blowing. This increases the risk of rupture of the preform. When the preform ruptures in liquid blow molding, the liquid scatters in a production facility, and stopping and restoring operation of the production facility requires long time. Thus, a significant variance in thickness of the bottom of the preform is highly likely to cause rupture or core misalignment, and it is necessary to obtain as much uniform a thickness as possible in the bottom. Accordingly, in the preform 1 according to the present disclosure, as described on the above, a difference in thickness of the bottom 2 is reduced as much as possible by configuring the bottom parting lines 2a to 2d to divide the bottom 2 into four equal parts in the circumferential direction, so that the preform 1 may be molded into the container 11 stably without undergoing rupture even by liquid blow molding.

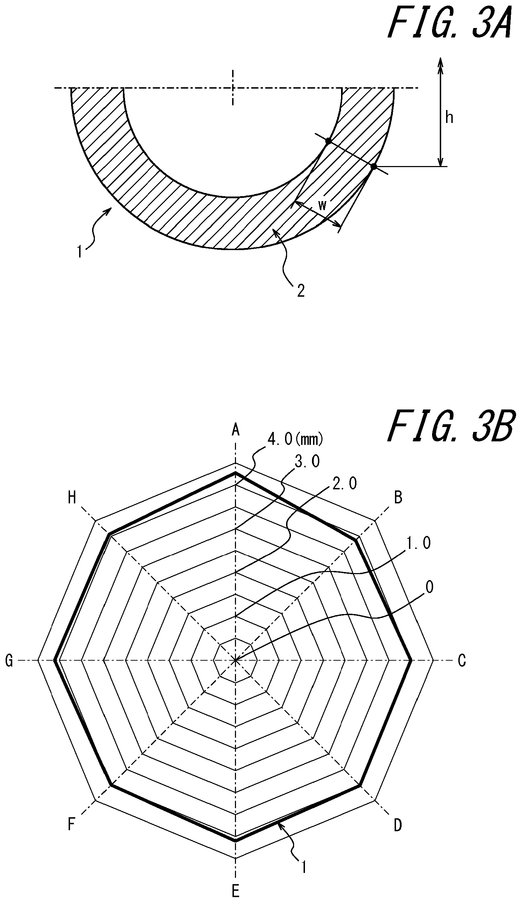

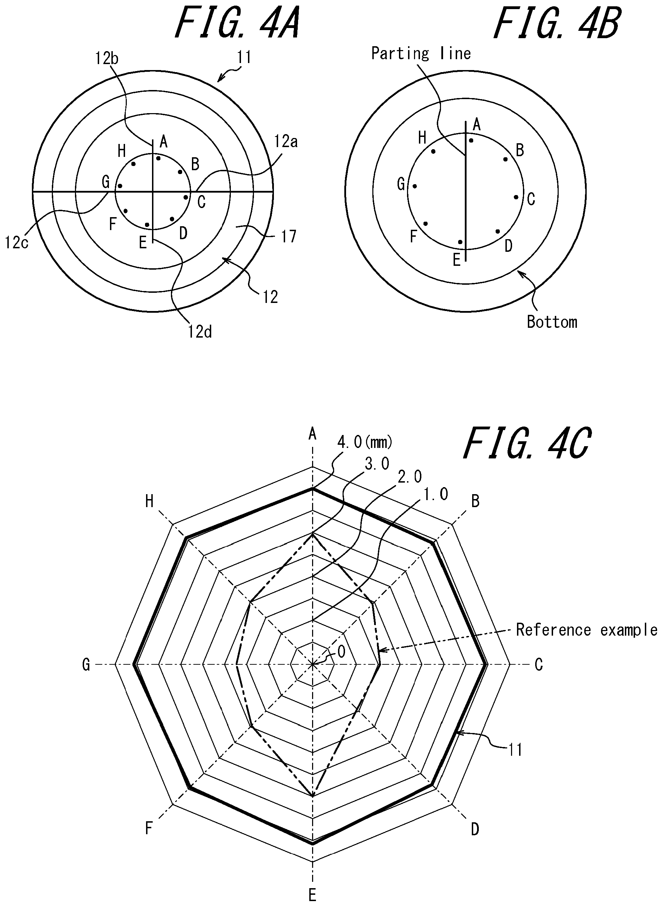

For the bottom 2 of the preform 1, which is obtained by extrusion blow molding, and for the bottom 12 of the container 11, which is obtained by biaxially stretch blow molding the preform 1, thickness distribution was examined. The results are illustrated in FIGs. 3A to 4C.Herein, as illustrated in FIG. 3A, a thickness *w* of the bottom 2 at a predetermined distance h from the neck ring 5 was measured at eight points (A to H) at which the bottom 2 is divided equally in the circumferential direction. FIG. 3B illustrates the result of the measurement. Furthermore, as illustrated in FIG. 4A, the thickness of the bottom 12 of the container 11 was measured at eight points from A to H (which correspond to the aforementioned measurement points in the case of the preform 1). FIG. 4C illustrates the result of the measurement. Additionally, FIG. 4B is a bottom view of a container (reference example) that is formed directly from a tube-shaped molten parison by extrusion blow molding (air blow molding) using a two-part mold. In the container according to the reference example, a single straight parting line is formed in the bottom. For the container according to the reference example also, the thickness of the bottom was measured at eight positions from A to H in FIG. 4B. A result of the measurement is represented by a two-dot chain line as the reference example in FIG. 4C.

As illustrated in FIG. 3B, the thickness of the bottom 2 of the preform 1 does not vary significantly in the circumferential direction, and thickness distribution in the circumferential direction of the bottom 2 is nearly uniform. Similarly, as illustrated in FIG. 4C, the thickness of the bottom 12 of the container 11, which is formed by biaxially blow molding the preform 1, does not vary significantly in the circumferential direction, and thickness distribution in the circumferential direction of the bottom 12 is nearly uniform. In contrast, as illustrated in FIG. 4C, in the container according to the reference example in which the single straight parting line is formed in the bottom, the thickness is increased in the vicinity of the parting line and is decreased in portions that are offset 90 degrees from the parting line. Thickness distribution is not uniform in the circumferential direction.

In this way, in the preform 1 according to the present disclosure, the bottom parting lines 2a to 2d, which are formed in the bottom 2, are configured to divide the bottom 2 into four equal parts in the circumferential direction. Accordingly, thickness distribution in the circumferential direction of the bottom 2 is uniform. This allows the bottom 2 of the preform 1 to be stretched uniformly without causing uneven thickness at the time of molding the preform 1 into the container 11 by biaxial stretch blow molding using the liquid as the pressurizing medium. Accordingly, the preform 1 is molded into the container 11 stably without undergoing rupture starting from a portion of the bottom 2.

Besides, all the lengths of the bottom parting lines 2a to 2d, which are formed in the bottom 2, from the axis of the bottom 2 to the outer ends thereof are equal. Accordingly, the effect caused by the bottom parting lines 2a to 2d on the thickness of the bottom 2 is uniform, and thickness distribution in the circumferential direction of the bottom 2 is even more uniform.

Although the configurations and advantageous effects of the present disclosure have been described above, the present disclosure is not limited to the configurations described in the above embodiments, and various changes may be made without departing the gist thereof.

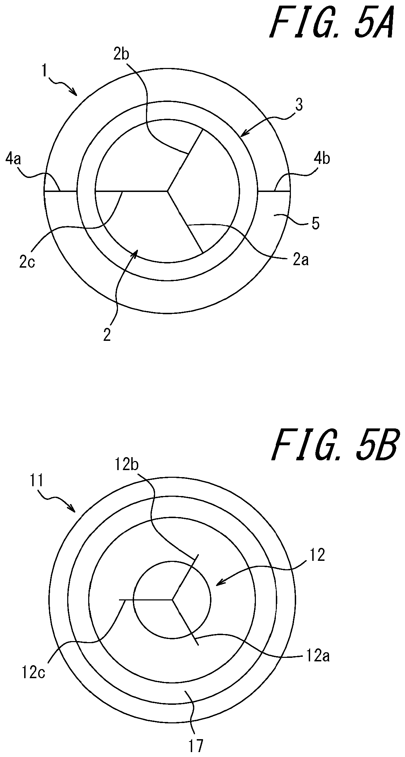

For example, although in the above embodiment the four bottom parting lines 2a to 2d, which are formed in the bottom 2 of the preform 1 due to extrusion blow molding, are illustrated to be arranged in the cross shape, the present disclosure is not limited to the above embodiment. As illustrated in FIG. 5A, for example, the three bottom parting lines 2a to 2c may be formed in the bottom 2 in a manner such that the three bottom parting lines 2a to 2c are arranged in a Y-shape that divides the bottom 2 into three equal parts in the circumferential direction. In this case also, all the lengths of the bottom parting lines 2a to 2c are preferably equal. By molding the preform 1 illustrated in FIG. 5A by biaxial stretch blow molding using the liquid as the pressurizing medium, the container 11 as illustrated in FIG. 5B may be formed. The container 11 in this example includes the bottom parting line marks 12a to 12c, which are arranged at an equal interval in the circumferential direction .In this case also, thickness distribution of the bottom 12 of the container 11 is uniform in the circumferential direction compared with cases where a straight bottom parting line is formed.

Furthermore, in the preform 1 illustrated in FIG. 5A, the trunk parting lines 3a and 3b are not formed in the trunk 3. In this case, as illustrated in FIG. 5B, the bottom parting line marks 12a to 12c, which correspond to the bottom parting lines 2a to 2c, are positioned inside the annular-shaped ground-contacting portion 17. That is to say, the bottom parting line marks 12a to 12c are not formed in the ground-contacting portion 17 of the container 11 resulting from molding. The above structure allows the ground-contacting portion 17 to be formed flat with no unevenness that would otherwise be caused by the bottom parting line marks 12a to 12c, thereby improving ground-contacting stability of the container 11. Moreover, the bottom parting line marks 12a to 12c are not exposed to the outside when the container 11 is in the upright position, and this improves good appearance of the container 11.

The aforementioned configuration in which the bottom parting marks 12a to 12c are not formed in the ground-contacting portion 17 of the bottom 12 may be achieved by adjusting the lengths of the bottom parting lines 2a to 2c, which are formed in the bottom 2 of the preform 1, and adjusting the degree to which the bottom 2 of the preform 1 is stretched in the longitudinal and the lateral direction during biaxial stretch blow molding.

Furthermore, five or more parting lines may be arranged side by side in the circumferential direction as long as the parting lines formed in the bottom 2 of the preform 1 divide the bottom 2 into at least three parts in the circumferential direction. In this case, the parting lines are preferably arranged at an equal interval.

Moreover, although in the above embodiment all the lengths of the bottom parting lines 2a to 2d, which are formed in the bottom 2 of the preform 1, are equal, these lengths may be different from each other.

Moreover, in the above embodiment, the preform 1 includes the hemispherical shell-shaped bottom 2 and the cylindrical-shaped trunk 3. However, the shapes of the bottom 2 and the trunk 3 are not limited to the above and may be changed as needed. For example, the trunk 3 may have an elliptical or a polygonal cross section.

Moreover, in the above embodiment, the container 11, which is formed from the preform 1, is described to have the bottomed cylindrical shape. However, the container 11 may have any other shape, such as a bottomed square tubular shape. The present disclosure is also applicable to a container that is smaller or larger than the illustrated container 11.

Moreover, although in the above embodiment the preform 1 and the container 11 have a single layer structure, the present disclosure is not limited to this embodiment. For example, the preform 1 and the container 11 may have a multi-layer structure. Examples of the multi-layer structure may include a two-layer structure having an outer layer and an inner layer and a three-layer structure having an inner layer, an outer layer, and an intermediate layer, such as an adhesion layer and a barrier layer, disposed between the inner and the outer layer.

### REFERENCE SIGNS LIST

- 1: Preform to be biaxially stretch blow molded
- 2: Bottom
- 2a: Bottom parting line
- 2b: Bottom parting line
- 2c: Bottom parting line
- 2d: Bottom parting line
- 3: Trunk
- 3a: Trunk parting line
- 3b: Trunk parting line
- 4: Mouth
- 4a: Mouth parting line
- 4b: Mouth parting line
- 5: Neck ring
- 6: Male screw portion
- 11: Container
- 12: Bottom
- 12a: Bottom parting line mark
- 12b: Bottom parting line mark
- 12c: Bottom parting line mark
- 12d: Bottom parting line mark
- 13: Trunk
- 14: Mouth
- 15: Neck ring
- 16: Male screw portion
- 17: Ground-contacting portion

## Claims

1. A process for producing a container (11), the process comprising: biaxially stretch blow molding a preform (1) formed in a bottomed tubular shape including a mouth (4), a trunk (3), and a bottom (2) into a container (11) by using a liquid as a pressurizing medium,
wherein a portion of a mold used to form the preform (1) by extrusion blow molding that corresponds to the bottom (2) has a structure that is splittable into at least three parts in a circumferential direction of the bottom (2), and joints of the portion of the mold extend to an outer side from an axis of the bottom (2), and
wherein, during the biaxial stretch blow molding, an annular-shaped ground-contacting portion is formed in a bottom (12) of the container (11), and one or more bottom parting line marks (12a, 12b, 12c), which correspond to one or more bottom parting lines (2a, 2b, 2c), are positioned inside the ground-contacting portion,
wherein that the bottom parting marks (12A, 12B12C) are not formed in the ground-contacting portion (17) of the bottom (12) is achieved by:
adjusting the lengths of the bottom parting lines (2a, 2b, 2c), which are formed in the bottom (2) of the preform (1), and
adjusting the degree to which the bottom (2) of the preform (1) is stretched in the longitudinal and the lateral direction during biaxial stretch blow molding.

2. The process according to claim 1, wherein the portion of the mold that corresponds to the bottom (12, 2) has a structure that is splittable into four parts to divide the bottom into four equal parts in the circumferential direction.

3. The process according to claim 1 or 2, wherein all lengths of the joints of the portion of the mold corresponding to the bottom (12, 2) from the axis of the bottom to outer ends thereof are equal.

## Patentansprüche

1. Verfahren zur Herstellung eines Behälters (11), wobei das Verfahren Folgendes umfasst: biaxiales Streckblasformen eines Vorformlings(1), der in einer mit einem Boden versehenen Röhrenform ausgebildet ist und eine Mündung (4), einen Rumpf (3) und einen Boden (2) umfasst, zu einem Behälter (11) durch Verwenden einer Flüssigkeit als ein Druckmedium,
wobei ein Abschnitt eines zum Bilden des Vorformlings (1) durch Extrusionsblasformen verwendeten Formwerkzeugs, der dem Boden (2) entspricht, eine Struktur aufweist, die in einer Umfangsrichtung des Bodens (2) in mindestens drei Teile geteilt werden kann, und Verbindungen des Abschnitts des Formwerkzeugs sich von einer Achse des Bodens (2) zu einer Außenseite erstrecken, und
wobei während des biaxialen Streckblasformens ein ringförmiger Bodenkontaktabschnitt in einem Boden (2) des Behälters (11) gebildet wird, und eine oder mehrere Bodentrennlinienmarkierungen (12a, 12b, 12c), die einer oder mehreren Bodentrennlinien (2a, 2b, 2c) entsprechen, innerhalb des Bodenkontaktabschnitts positioniert werden,
wobei erreicht wird, dass die Bodentrennmarkierungen (12A, 12B, 12C) nicht im Bodenkontaktabschnitt (17) des Bodens (12) ausgebildet werden, durch:
Anpassen der Längen der Bodentrennlinien (2a, 2b, 2c), die im Boden (2) des Vorformlings (1) ausgebildet sind, und
Anpassen des Grades, bis zu dem der Boden des Vorformlings (1) in der Längs-und in der Querrichtung während des biaxialen Streckblasformen gestreckt wird.

2. Verfahren nach Anspruch 1, wobei der Abschnitt des Formwerkzeugs, der dem Boden (12, 2) entspricht, eine Struktur aufweist, die in vier Teile geteilt werden kann, um den Boden in der Umfangsrichtung in vier gleiche Teile aufzuteilen.

3. Verfahren nach Anspruch 1 oder 2, wobei alle Längen der Verbindungen des Abschnitts des Formwerkzeugs, der dem Boden (12, 2) entspricht, von der Achse des Bodens bis zu den äußeren Enden davon gleich sind.

## Revendications

1. Procédé de production d'un récipient (11), le procédé comprenant : le moulage par soufflage par étirement biaxialement d'une préforme (1) formée dans une forme tubulaire à partie inférieure comprenant une bouche (4), un tronc (3) et une partie inférieure (2) dans un récipient (11) en utilisant un liquide comme milieu de pressurisation, **caractérisé en ce qu'**une partie d'un moule utilisé pour former la préforme (1) par moulage par soufflage par extrusion qui correspond à la partie inférieure (2) ayant une structure qui est divisible en au moins trois parties dans une direction circonférentielle de la partie inférieure (2), et des articulations de la partie du moule s'étendent à un côté externe d'un axe de la partie inférieure (2), et
**caractérisé en ce que**, durant le moulage par soufflage par étirement biaxial, une partie contactant la terre de forme annulaire étant formée dans une partie inférieure (2) du récipient (11), et une ou plusieurs marque(s) de ligne de partition de partie inférieure (12a, 12b, 12c), qui corresponde(nt) à une ou plusieurs ligne(s) de partition de partie inférieure (2a, 2b, 2c), est/sont positionnée(s) à l'intérieur de la partie contactant la terre, les marques de partition de partie inférieure (12A, 12B, 12C) n'étant pas formées dans la partie contactant la terre (17) de la partie inférieure (12) étant obtenues par :
ajustement des longueurs des lignes de partition (2a, 2b, 2c) de partie inférieure qui sont formées dans la partie inférieure (2) de la préforme (1), et
ajustement du degré auquel la partie inférieure (2) de la préforme (1) est étirée dans les directions longitudinale et latérale durant le moulage par soufflage par étirement biaxial.

2. Procédé selon la revendication 1, dans lequel la partie du moule qui correspond à la partie inférieure (12, 2) a une structure qui est divisible en quatre parties pour diviser la partie inférieure en quatre parties égales dans la direction circonférentielle.

3. Procédé selon la revendication 1 ou 2, dans lequel toutes les longueurs des articulations de la partie du moule correspondant à la partie inférieure (12, 2) de l'axe de la partie inférieure à ses extrémités externes sont égales.
